# EUROPÄISCHE PATENTANMELDUNG

(11) **EP 2 309 296 A1**
(43) Veröffentlichungstag der Anmeldung: **13.04.2011**
(21) Anmeldenummer: 10176194.8
(22) Anmeldetag: 10.09.2010
(51) Int. Cl.: G02B 7/02, G02B 7/10, G02B 27/09, G02B 3/00, F21S 8/00

(54) **Trägerstruktur für eine mehrzahl von linsen, linse, linsensystem und optisches system**

(30) Priorität: 11.09.2009 EP 09011675
(71) Anmelder: GLP German Light Products GmbH, 76307 Karlsbad (DE)
(72) Erfinder: Salm, Markus, 66265, Heusweiler (DE)
(74) Vertreter: Zimmermann, Tankred Klaus

(57) **Zusammenfassung**

Ausführungsbeispiele zeigen eine Trägerstruktur (10) für eine Mehrzahl von Linsen (5), mit einer Trägerplatte (20); und einer Mehrzahl von aneinander angrenzenden, hexagonalen Abschnitten (25) auf der Trägerplatte (20), wobei in jedem der hexagonalen Abschnitte (25) eine zentrale Öffnung (30) vorgesehen ist, die die Trägerplatte durchdringt, und wobei die Trägerplatte (20) an den Scheitelpunkten der aneinander angrenzenden, hexagonalen Abschnitte jeweils Ausnehmungen (35) zur Aufnahme eines Befestigungsstiftes einer Linse (5) aufweist.

## Beschreibung

Die vorliegende Erfindung bezieht sich auf eine Trägerstruktur für eine Mehrzahl von Linsen, auf eine Linse, auf ein Linsensystem und auf ein optisches System. Insbesondere bezieht sich die vorliegende Erfindung auf ein optisches System mit einem Linsenarray mit einer Mehrzahl von Leuchtdioden (LEDs) im rot-grün-blau (RGB)- Mix, einem totalen internen (TIR) -Reflektor (TIR =: Total Internal Reflection) und einem Träger mit Linsen, wie z. B. Plankonvexlinsen, welcher durch Vor- und Zurückfahren eine Zoomfunktion des Lichtstrahls ermöglicht. Bei dem optischen System kann es sich beispielsweise um einen Scheinwerfer oder einen sogenannten Moving Head handeln, wie sie beispielsweise zur Beleuchtung in der Bühnentechnik oder bei Veranstaltungen unterschiedlicher Art eingesetzt werden.

Ein bekannter Ansatz zur Herstellung eines Linsenarrays besteht darin, ein großes Linsenarray spritzen zu lassen, was jedoch die folgenden Nachteile hat:
- Erhebliche Werkzeugkosten da ja das ganze, sehr große, Array eine Linse ist und daher das komplette Spritzwerkzeug nach optischen Standards poliert werden muss.
- Es ist nicht möglich das komplette Array mit max. Transmission zu produzieren, da während des Spritzvorgangs das PMMA (Polymethylmethacrylat) erkaltet, wodurch sich Schlieren im Kunststoff bilden, die die optische Performance sehr negativ beeinflussen.
- PMMA ist zwar relativ formstabil, kann aber nicht so gut für die Produktion großer und flacher Bauteile verwendet werden, wie entsprechende Hochleistungskunststoffe.
- Das Array ist nur für einen Gerätetyp verwendbar. Für Geräte mit einer anderen Linsenanzahl ist ein neues Spritzwerkzeug notwendig.

Es ist die Aufgabe der Erfindung, einen Ansatz zu schaffen, der eine vereinfachte Bereitstellung eines Linsenarrays ermöglicht.

Diese Aufgabe wird durch eine Trägerstruktur nach Anspruch 1 und eine Linse nach Anspruch 3 gelöst.

Die vorliegende Erfindung schafft eine Trägerstruktur für eine Mehrzahl von Linsen mit einer Trägerplatte und einer Mehrzahl von aneinander angrenzenden, hexagonalen Abschnitten auf der Trägerplatte, wobei in jedem der hexagonalen Abschnitte eine zentrale Öffnung vorgesehen ist, die die Trägerplatte durchdringt, und wobei die Trägerplatte an den Scheitelpunkten der aneinander angrenzenden, hexagonalen Abschnitte jeweils Ausnehmungen zur Aufnahme eines Befestigungsstiftes einer Linse aufweist.

Gemäß einem Ausführungsbeispiel können die Ausnehmungen an den Scheitelpunkten die Trägerplatte durchdringen.

Die vorliegende Erfindung schafft eine Linse zur Anordnung in einem Trägersystem, mit einem Linsenkörper, einem ersten Befestigungsstift, der an einer ersten Position an dem Linsenkörper angeordnet ist und sich in einer ersten Richtung von dem Linsenkörper erstreckt, und einem zweiten Befestigungsstift, der an einer zweiten Position an dem Linsenkörper angeordnet ist und sich in die erste Richtung erstreckt.

Gemäß einem Ausführungsbeispiel umfasst der Linsenkörper eine erste, ebene Hauptoberfläche und eine gewölbte, der ersten Hauptoberfläche gegenüberliegende zweite Hauptoberfläche, und der erste Befestigungsstift und der zweite Befestigungsstift erstrecken sich senkrecht zu der ersten Hauptoberfläche.

Gemäß einem Ausführungsbeispiel umfasst der Linsenkörper eine erste, gewölbte Hauptoberfläche und eine gewölbte, der ersten Hauptoberfläche gegenüberliegende zweite Hauptoberfläche, wobei sich der erste Befestigungsstift und der zweite Befestigungsstift senkrecht zu der ersten Hauptoberfläche erstrecken.

Gemäß Ausführungsbeispielen definiert der Linsenkörper eine Plankonvexlinse, eine Bikonvexlinse, eine Konkav-Konvexlinse, eine Bikonkavlinse, eine Plankonkavlinse oder beispielsweise auch eine Konvex-Konkavlinse. Der Linsenkörper kann als Sammellinse oder als Zerstreuungslinse ausgebildet sein.

Gemäß einem Ausführungsbeispiel sind die erste Position, an der der erste Befestigungsstift angeordnet ist, und die zweite Position, an der der zweite Befestigungsstift angeordnet ist, diametral gegenüberliegend an dem Linsenkörper angeordnet.

Die vorliegende Erfindung schafft ferner ein Linsensystem mit dem erfmdungsgemäßen Trägersystem und einer Mehrzahl von erfindungsgemäßen Linsen, deren Befestigungsstifte in den Ausnehmungen der Trägerplatte des Trägersystems aufgenommen sind.

Ferner schafft die vorliegende Erfindung ein optisches System, mit einem Array von Lichtquellen und dem erfindungsgemäßen Linsensystem.

Gemäß einem Ausführungsbeispiel ist das Linsensystem bezüglich des Arrays von Lichtquellen beweglich angeordnet, um eine Zoomfunktion für den von den Lichtquellen erzeugbaren Lichtstrahl bereitzustellen.

Gemäß einem Ausführungsbeispiel umfasst das optische System ferner einen Reflektor, der zwischen dem Array von Lichtquellen und dem Linsensystem angeordnet ist.

Gemäß einem Ausführungsbeispiel umfasst das optische System ferner einen Reflektor, der zwischen dem Array von Lichtquellen und dem Linsensystem angeordnet ist.

Gemäß einem weiteren Ausführungsbeispiel kann das optische System alternativ auch einen normalen Rotationsellipsoid, einen Parabolspiegel bzw. einen CPC (CPC =: Compound Parabolic Concentrator) oder eine asphärische Linse aufweisen.

Gemäß einem weiteren Ausführungsbeispiel der vorliegenden Erfindung kann das optische System neben einem Reflektor wie z. B. dem TIR-Reflektor, dem Rotationsellipsoid, dem CPC-Element oder einer asphärischen Linse eine weitere Linsengruppe aufweisen. Diese Linsengruppe kann beispielsweise zwischen dem erfindungsgemäßen Linsensystem und dem Reflektor bzw. den oben genannten Alternativen im Lichtstrahlengang des optischen Systems angeordnet sein. Eine weitere Linsengruppe kann die Lichtstrahl- bzw. Beam-Qualität des optischen Systems weiter verbessern.

Gemäß einem Ausführungsbeispiel umfasst das Array von Lichtquelle eine Mehrzahl von Leuchtdioden (LEDs, z. B. 120 LEDs) in einem Rot-Grün-Blau(RGB)-Mix. Das Linsensystem umfasst in diesem Ausführungsbeispiel Plankonvexlinsen, und der Reflektor ist z.B. als ein TIR-Reflektor ausgebildet. Wie oben bereits erläutert, ist es jedoch auch denkbar, dass anstelle eines solchen Reflektors ein normaler Rotationsellipsoid oder auch ein CPC verwendet wird.

Die Erfindung ermöglicht es, dass die Linsen, z.B. die Plankonvex- oder Bikonvexlinsen möglichst dicht an dicht sitzen, wodurch ein möglichst homogenes Erscheinungsbild und ein möglichst kompaktes Gerät gewährleistet ist.

Die Erfindung betrifft auch die mechanische Ausgestaltung der Linsenmontage, so dass:
- eine max. Packungsdichte (Linsen berühren sich tangential ohne Spalt dazwischen) erreicht werden kann,
- die Einzellinsen flexibel genug in der Anwendung sind um auch in anderen Geräten, z.B. mit mehr oder weniger Linsen oder sog. "Striplites", eingesetzt werden zu können,
- die Linsen ohne Kleber , z.B. auf der Trägerplatte, befestigt werden können,
- durch die Beschränkung auf Einzellinsen ein preisgünstiges Spritzwerkzeug genutzt werden kann.

Hierzu sind folgende Grundüberlegungen angestellt worden:
- Wenn man ein Array aus runden Linsen so anordnet dass jede Linse ihre Nachbarlinse berührt, so erhält man eine hexagonale Grundstruktur.
- Da die komplette Apertur der Linse für den Strahlengang genutzt werden soll, stehen zur Montage lediglich die "Lücken" im Hexagonalgitter zur Verfügung.
- Der Strahlengang der die Linsen trifft ist divergent. Die Öffnungen in der Trägerplatte können also konisch sein. Das heißt, die Öffnungen können an der linsenzugewandten Seite größer sein als an der linsenabgewandten Seite.

Den letzten Aspekt macht man sich zu Nutze um überhaupt einen Träger erstellen zu können der die Linsen hält. Würde jede Linse einen sechseckigen Bund aufweisen und diese mit einem Kleber aufgeklebt werden, so wäre das Linsenarray prinzipiell fertig. Dies hätte aber wiederum Nachteile, nämlich:
- Die Kosten zur Herstellung der Linsenarrays könnten erhöht sein, da der Kleber Geld kostet.
- Die Klebeverbindung könnte durch die UV-Belastung und die unterschiedlichen Wärmeausdehnungskoeffizienten der Materialien mit der Zeit rissig werden und evtl. nach längerem Betrieb abfallen. Dies würde sich durch eine leicht flexible Klebung vermeiden lassen. Das aber steht im Widerspruch zu der Anforderung an eine präzise positionierte Linse.
- Die korrekte Positionierung der Linsen vor den Öffnungen im Träger müsste durch ein externes Werkzeug durch Fixieren während des Klebevorgangs gewährleistet werden.
- Das Aushärten des Klebers ist bei einer Massenproduktion ein nicht unerheblicher Zeitfaktor: Kleber aufbringen - Linsen bestücken - fixieren - warten bis Kleber ausgehärtet ist - weiter verarbeiten. Dies kann wieder zu erhöhten Herstellungskosten im Vergleich zu einer Herstellung ohne Verwendung von Klebstoffen führen.

Die der Erfindung zugrunde liegende Erkenntnis zur schnellen und kostengünstigen Bestückung besteht darin, den Linsen (mit quasi-sechseckigem Bund) an zwei gegenüberliegenden Seiten einen Zapfen anzuspritzen, der durch kleine Öffnungen im Träger gesteckt wird. Der Zapfen kann auf der Rückseite durch beliebige Methoden (federnder Sicherungsring, Heat Staking bzw. Hitzenieten, Ultraschall verschweißen) gesichert werden. Die beiden letzteren Methoden haben den Vorteil dass der Prozess automatisiert ablaufen und auch automatisiert auf Güte überwacht werden kann.

Es gibt keine laufenden Kosten für Verbrauchsmaterialien wie Kleber und das fertige Bauteil kann nach dem letzten Schweißvorgang sofort weiter verarbeitet werden ohne auf das Aushärten eines Klebers warten zu müssen.

Desweiteren haben die Linsen einseitig Überlappungen (ähnlich wie bei Dachziegeln), sodass sich diese gegenseitig halten können.

Durch die Stifte (Zapfen) können die Linsen beim Bestücken sehr einfach positioniert werden ohne dass eine zeit- und kostenintensive Justage erforderlich wäre.

Durch dieses Verfahren bleiben zum Erstellen des Linsenträgers praktisch alle Materialmöglichkeiten. Möglich sind schwarzer Hochleistungs-Konstruktionskunststoff (z.B. PPS-GF40) - der gleichzeitig auch noch eine Blendenfunktion übernimmt, gefrästes Aluminium (stabil), gespritzte Magnesiumlegierungen (leicht) oder sogar Keramikträger (für extreme Stabilität).

Ein weiterer Vorteil ist, dass die einzelnen Komponenten beim Recycling mechanisch einfach voneinander getrennt werden können und dann separat einer Wiederverwertung zugeführt werden können.

Die beigefügten Zeichnungen zeigen Details von Ausführungsbeispielen der Erfindung:
- Fig. 1: eine isometrische Draufsichtdarstellung eines Trägersystems für ein Linsen- system gemäß der vorliegenden Erfindung mit einer aus dem Trägersystem entfernten Plankonvexlinse mit an gegenüberliegenden Positionen angeord- neten Befestigungszapfen;
- Fig. 2: eine isometrische Draufsichtdarstellung eines Linsensystems gemäß der vorliegenden Erfindung mit Trägersystem und einer Mehrzahl von Plankon- vexlinsen;
- Fig. 3(a): eine Draufsichtdarstellung eines Linsensystems aus Fig. 2, das entlang einer Linie abgeschnitten ist;
- Fig. 3(b): eine Schnittdarstellung des Linsensystems aus Fig. 3(b);
- Fig. 4: eine isometrische Draufsichtdarstellung von drei Linsen gemäß einem Aus- führungsbeispiel der Erfindung mit an gegenüberliegenden Positionen ange- ordneten Befestigungszapfen, wobei die Linsenkörper einen quasi- sechseckigen Bund aufweisen, der den zentralen Linsenabschnitt umgibt und an dem die Befestigungszapfen angeordnet sind;
- Fig. 5: eine Draufsichtdarstellung der drei Linsen aus Fig. 4, die deren relative Annordnung zueinander zeigt, wenn diese in dem Trägersystem angeordnet sind;
- Fig. 6: eine vergrößerte, isometrische Draufsichtdarstellung eines Ausschnitts des Linsensystems aus Fig. 1, in dem die Linsen aus Fig. 4 angeordnet sind; und
- Fig. 7: den Ausschnitt aus Fig. 6, wobei ein Teil der Linsen aus dem Trägersystem entfernt ist, so dass die Trägerplatte und die hexagonalen Abschnitte zu er- kennen sind, ebenso wie die zentrale Öffnung für den Lichtdurchtritt und die kleineren Ausnehmungen zur Aufnahme der Befestigungszapfen der Linsen.
- Fig. 8: eine schematische Darstellung eines optischen Systems mit dem erfin- dungsgemäßen Linsensystem, sowie einen Array von Lichtquellen; und
- Fig. 9: eine schematische Darstellung eines optisches System, wobei das Linsen- system bezüglich des Arrays von Lichtquellen beweglich angeordnet ist und wobei alternativ schematisch eine zweite und/oder dritte Linsengruppe in dem Strahlengang des optischen Systems angeordnet ist.

Bezüglich der nachfolgenden Beschreibung der Ausführungsbeispiele der vorliegenden Erfindung sollte beachtet werden, dass in den unterschiedlichen Figuren für funktional identische bzw. gleichwirkende oder funktionsgleiche äquivalente Elemente oder Schritte zur Vereinfachung in der gesamten Beschreibung die gleichen Bezugszeichen verwendet werden.

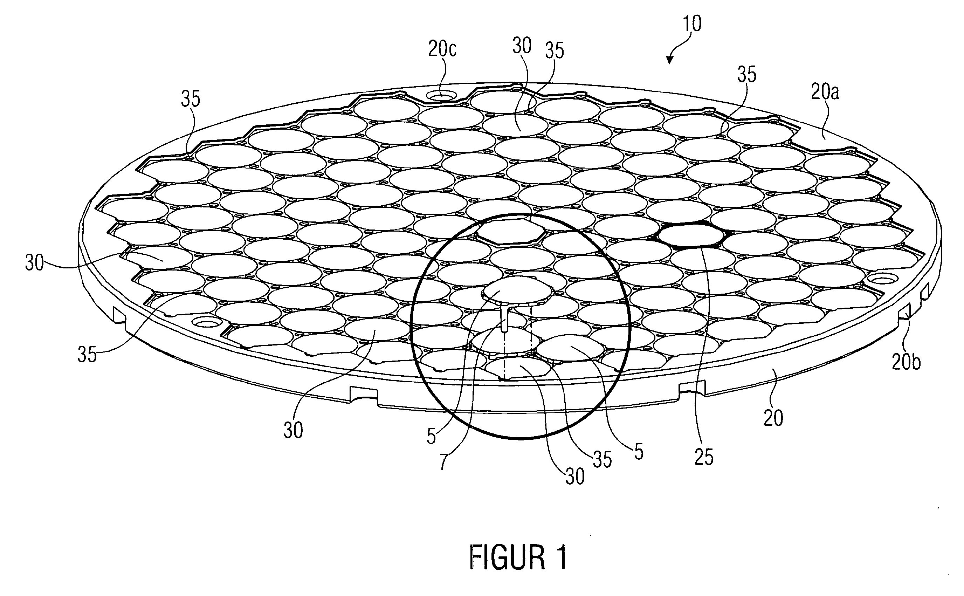

In Fig. 1 ist in einer perspektivischen Ansicht eine Trägerstruktur bzw. ein Trägersystem 10 für eine Mehrzahl von Linsen 5 gemäß einem Ausführungsbeispiel der vorliegenden Erfindung dargestellt. Die Trägerstruktur 10 weist eine Trägerplatte 20 auf und eine Mehrzahl von aneinander angrenzenden, hexagonalen Abschnitten 25 auf der Trägerplatte 20. Jeder der hexagonalen Abschnitte 25 weist eine zentrale Öffnung 30 auf. Die hexagonalen Abschnitte 25 bilden also Stege, die wabenförmig ausgebildet sind. Jeder hexagonale Abschnitt weist dabei eine zentrale kreisförmige Öffnung auf, deren Durchmesser größer sein kann als die Breite der Stege der hexagonalen Abschnitte 25. Die Scheitelpunkte bzw. die Ecken der einander angrenzenden hexagonalen Abschnitte 25 können jeweils Ausnehmungen 35 aufweisen. Diese Ausnehmungen können so ausgebildet sein, dass sie einen Befestigungsstift 7 einer auf der Trägerstruktur zu befestigende Linse 5 aufnehmen können. Das heißt, die Linsen 5 können mit Hilfe der Befestigungsstifte 7 in die jeweiligen Ausnehmungen bzw. Bohrungen 35 gesteckt werden.

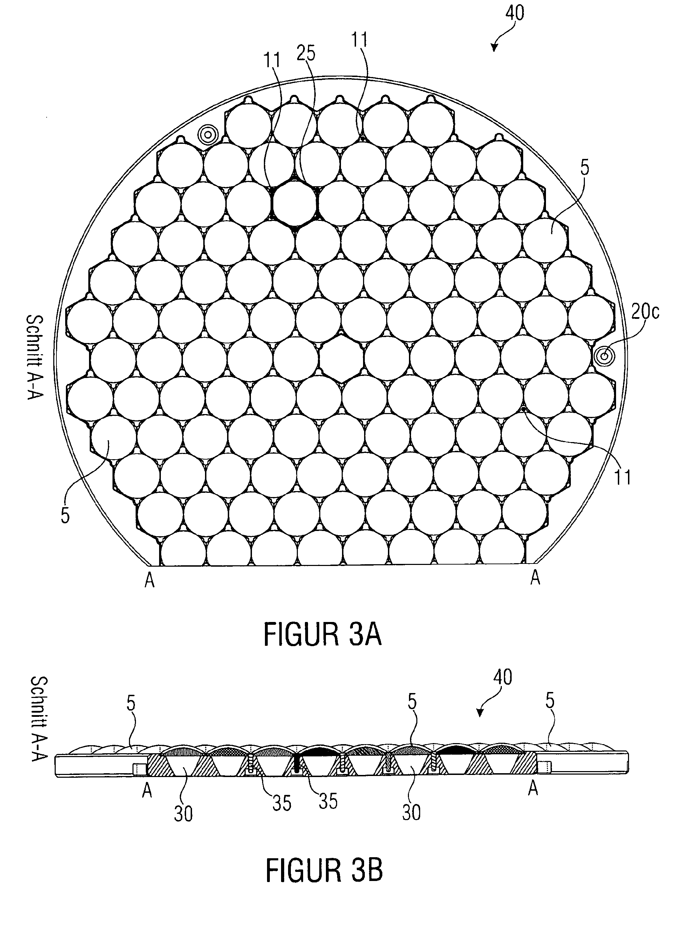

Wie in Fig. 1 dargestellt ist, kann die Trägerstruktur 10 beispielsweise eine runde, eine ovale oder eckige Form aufweisen und scheibenförmig ausgebildet sein. Die Form der Trägerstruktur für ein Linsensystem kann so ausgebildet sein, dass das Linsensystem beispielsweise in ein entsprechend geformtes Gehäuse eines Schweinwerfers eingesetzt werden kann. Die oberen Randgebiete 20a der Trägerplatte 20 können geringfügig erhöht sein gegenüber den etwas tiefer liegenden hexagonalen Abschnitten 25 der Trägerplatte 20. Diese hexagonalen Abschnitte können beispielsweise aus einer Aluminium Trägerplatte 20 ausgefräst sein. Der Höhenunterschied zwischen den hexagonalen Abschnitten 25 und den Randgebieten 20a der Trägerplatte kann in der Größenordnung der Dicke des Linsenkörpers 15 der Linse 5 liegen, wobei wie in Fig. 3b zu sehen ist, die Linsen 5 noch über den oberen Rand Trägerplatte 20 hinausragen können.

Die Trägerstruktur 10 zum Erstellen des Linsensystems kann aus einer Vielzahl von Materialien ausgebildet werden. Beispielsweise können Metalle wie z. B. Aluminium oder auch Kunststoffe, wie z. B. der Hochleistungskonstruktionskunststoff PPS-GF 40, der gleichzeitig auch noch eine Blendenfunktion übernehmen kann, verwendet werden. Die Trägerstruktur 10 kann beispielsweise auch aus (gespritzten) Magnesiumlegierungen bestehen, die vorteilhafterweise sehr leicht sind oder sogar aus Keramikträgern, die eine sehr hohe Stabilität aufweisen können.

Wie nun aus der Fig. 1 ersichtlich ist, können durch den "mosaikartigen" Aufbau mit den hexagonalen Abschnitten 25 identische Linsen 5 vorteilhafterweise in unterschiedlich großen bzw. dimensionierten Trägerstrukturen 10 mit unterschiedlicher Gestalt verwendet werden. Weist also eine Trägerstruktur 10 beispielsweise einen kleineren Durchmesser auf, so befinden sich auf der Trägerplatte 20 entsprechend weniger hexagonale Abschnitte 25 für die Aufnahme von Linsen 5 und dementsprechend werden weniger Linsen 5 auf der Trägerplatte 20 befestigt. Durch das erfindungsgemäße Trägersystem für eine Mehrzahl von Linsen kann also auf einfache Art und Weise ein Linsenarray für verschiedengestaltige und dimensionierte Linsensysteme geschaffen werden. Umgekehrt können natürlich auch die Abmessung bzw. Dimensionen der hexagonalen Abschnitte 25 verändert werden, d. h. es können entsprechend größer oder kleiner dimensionierte Linsen 5 verwendet werden.

Das erfindungsgemäße Linsensystem aus Trägerstruktur bzw. Trägersystem 10 und einer Mehrzahl von Linsen 5 kann beispielsweise in einem optischen System wie z. B. einem Scheinwerfer oder einer sogenannten Moving Head für Beleuchtungszwecke eingebaut werden. Die Trägerplatte 20 kann in einem seitlichen Randbereich 20b Ausnehmungen zur mechanischen Halterung oder Befestigung der Trägerstruktur in einem Gehäuse eines Scheinwerfers aufweisen. Die Trägerstruktur 10 kann ferner an ihrer Oberfläche im Randbereich 20a Durchführungen bzw. Löcher 20c zur mechanischen Führung oder Halterung der Trägerstruktur 10 aufweisen.

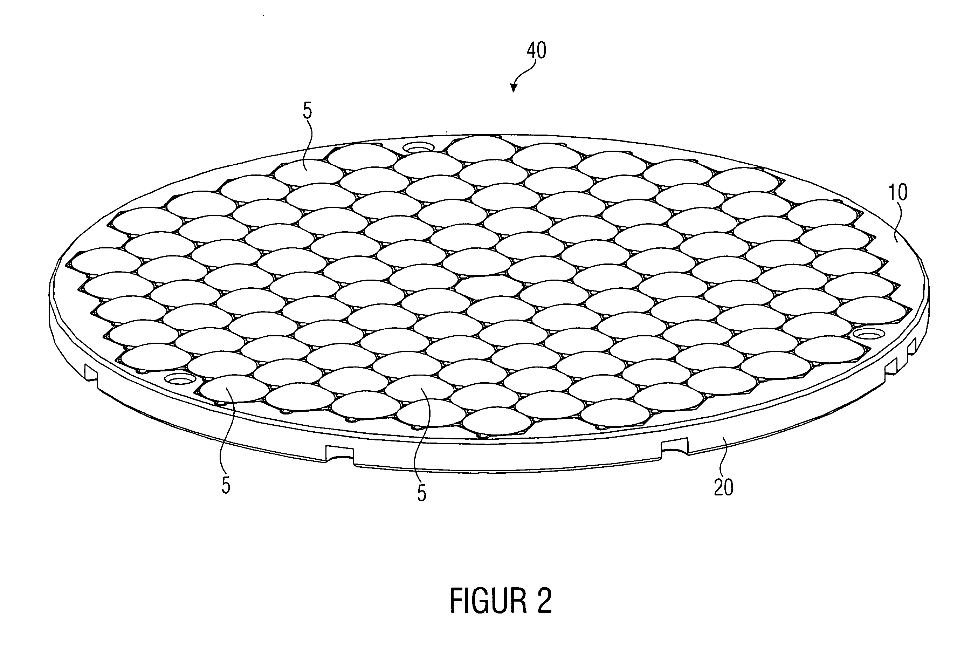

In Fig. 2 ist die isometrische Draufsichtdarstellung eines Linsensystems 40 mit einem Trägersystem 10, wie es in Zusammenhang mit Fig. 1 beschrieben wurde, und einer Vielzahl von darauf angeordneten Linsen 5 dargestellt. Die einzelnen Linsen 5 sind dabei mit Hilfe ihre jeweiligen Befestigungsstifte in die Trägerstruktur 10 eingelassen. Zusammen bilden die einzelnen Linsen 5 ein Linsenarray, welches in seiner Größe und Dimension an die Größe und Dimension der Trägerstruktur 10 angepasst ist.

In Fig. 3a ist eine Draufsichtdarstellung des Linsensystems 40, das entlang einer Linie A-A abgeschnitten ist, dargestellt. In Ausführungsbeispielen ist das Linsenarray, welches aus der Gesamtheit der Einzellinsen 5 gebildet wird, so aufgebaut, dass die Einzellinsen 5 eine maximale Packungsdichte innerhalb der Trägerstruktur 10 aufweisen. Das heißt, dass sich die Linsen tangential jeweils gegenseitig berühren, ohne dass ein Spalt gegeben ist. Bei der Verwendung von runden Linsen, die die maximale Packungsdichte erreichen sollen, berührt jede Linse ihre Nachbarlinse. Man erhält so eine hexagonale Grundstruktur, wie sie aus der Draufsicht in Fig. 3a ersichtlich ist und die in ihrer Grundform den aneinander angrenzenden hexagonalen Abschnitten 25 auf der Trägerplatte 20 in Fig. 1 entsprechen. Da möglichst die komplette Apertur jeder einzelnen Linse des Linsenarrays vollständig für den Strahlengang genutzt werden soll, stehen zur Montage der Linsen 5 auf der Trägerstruktur 10 lediglich die "Lücken" 11, die sich zwischen den berührenden runden Linsenkörpern 15 an den jeweiligen Ecken des Sechsecks bzw. der hexagonalen Abschnitte ergeben, zur Verfügung.

In Fig. 3b ist die Seitenansicht des Schnitts A-A des Linsensystems aus Fig. 3a dargestellt. In diesem Ausführungsbeispiel sind die zentralen Öffnungen 30 in der Trägerplatte 10 kegelstumpfförmig ausgebildet. Das heißt, die zentralen Öffnungen 30 sind an der den Linsen zugewandten Seite bzw. der Oberseite 20d der Trägerplatte 10 im Querschnitt größer als an der linsenabgewandten Seite bzw. der Unterseite 20d der Trägerplatte.

Ferner sind die Ausnehmungen 35 in den "Lücken" im hexagonalen Gitter zur Montage der Linsen 5 dargestellt. Diese Ausnehmungen 35 sind ausgebildet, um die Befestigungsstifte der Linsen 5 aufzunehmen.

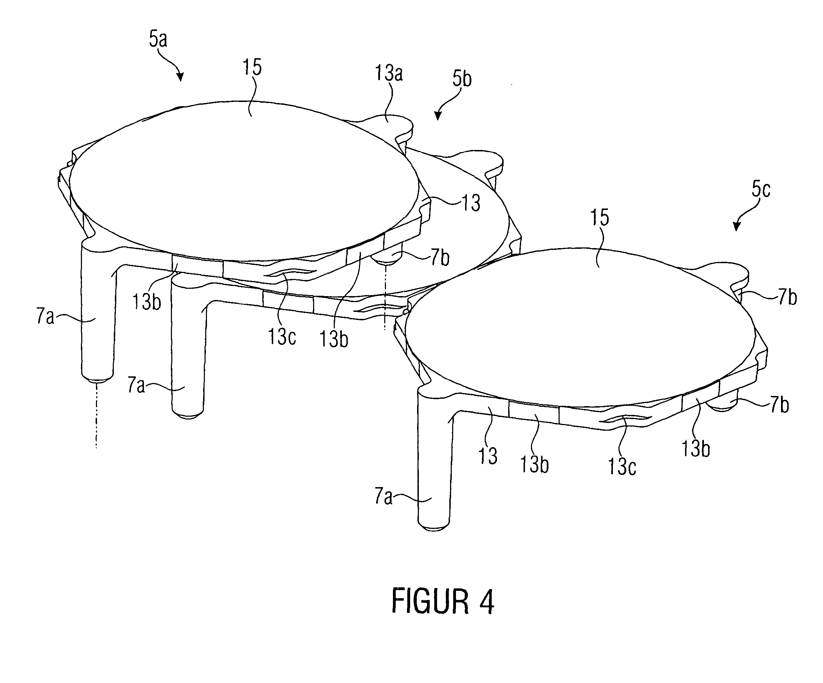

Ein Ausführungsbeispiel der erfindungsgemäßen Linsen 5 ist in der isometrischen Draufsichtdarstellung der Fig. 4 dargestellt. In Fig. 4 sind drei Linsen 5a-c gemäß einem Ausführungsbeispiel der Erfindung mit an gegenüberliegenden Positionen angeordneten Befestigungszapfen dargestellt. Die Linse 5a weist einen Linsenkörper 15 sowie zwei an gegenüberliegenden Positionen angeordnete Befestigungszapfen 7a, 7b auf. Der Linsenkörper 15 ist als optische Linse zur optischen Abbildung ausgebildet. Dementsprechend kann der Linsenkörper 15 z. B. als Bikonvexlinse, Plankonvexlinse, Konkav-Konvexlinse, Bikonkavlinse, Plan-Konkavlinse oder Konvex-Konkavlinse ausgebildet sein. Bei dem Linsenkörper 15 kann es sich um eine sphärische Linse oder aber auch um eine asphärische Linse handeln.

Die Linse 5 weist ferner einen quasi sechseckigen Bund bzw. Rand 13 auf, der den zentralen Linsenkörper bzw. Linsenabschnitt 15 umgibt und der mit den Befestigungszapfen 7a, 7b verbunden ist. Jeder Rand 13 weist an den sechs Seiten Kontaktbereiche 13b auf, die in einem maximal dicht gepackten Linsensystem bzw. Linsenarray bündig an die benachbarten Linsen anschließt. Das heißt, an den Kontaktbereichen 13b berühren sich benachbarte Linsen im Linsensystem tangential ohne Spalt. Dadurch kann eine maximale Packungsdichte der Linsen erzielt werden und somit potentielle Lichtverluste eines durch das Linsensystem hindurchtretenden Lichtstrahls minimiert werden. Der Bund bzw. der Linsenrand 13 weist ferner Ausnehmungen 13c auf, die so ausgebildet sind, dass eine Überlappung 13a einer anderen Linse bei der Linsenmontage jeweils in die Ausnehmungen 13c zweier anderer Linsen eingefügt werden kann, so dass die einzelnen Linsen ähnlich wie bei Dachziegeln überlappen und sich dadurch gegenseitig mechanisch halten bzw. stabilisieren. Die Überlappung 13a kann, wie in diesem Ausführungsbeispiel gezeigt ist, über dem Befestigungszapfen 7b einer Linse ausgebildet sein. Denkbar ist natürlich auch eine Montage der Linsen ohne Überlappung oder mittels einer anders ausgebildeten Überlappung.

Durch die Stifte bzw. Zapfen 7 können die Linsen 5 beim Bestücken einer Trägerstruktur 10 sehr einfach positioniert und sehr schnell montiert werden, ohne dass eine zeit- und kostenintensive Justage der einzelnen Linsen erforderlich ist. Die Linsen 5 werden mit ihren Befestigungsstiften quasi nur in die Ausnehmungen 35 eingesteckt. Die Zapfen oder Befestigungsstifte 7 können an den Linsenkörper 15 z.B. angespritzt werden. Die Zapfen bzw. Befestigungsstifte können durch verschiedene Methoden, wie z.B. den Gebrauch von federnden Sicherungsringen, mittels Heat Staking oder Ultraschall verschweißen gesichert werden. Die Befestigungsstifte können also auf vielfältige und einfache Weise in den Ausnehmungen 35 befestigt werden. Es gibt also keine laufenden Kosten für Verbrauchsmaterialien wie Kleber und das fertige Bauteil kann nach dem letzten Schweißvorgang sofort weiter verarbeitet werden ohne auf das Aushärten irgendeines Klebers warten zu müssen.

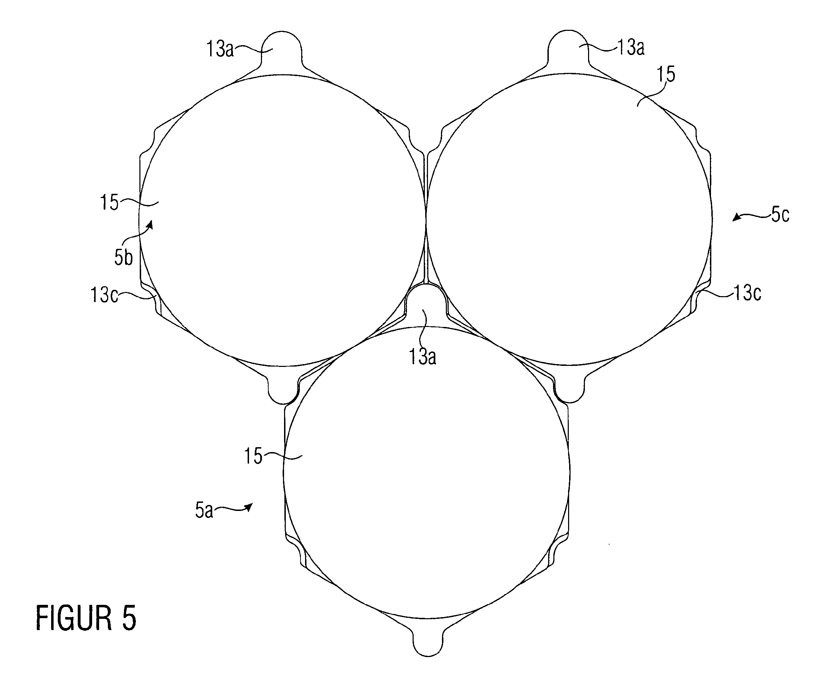

In Fig. 5 ist die Draufsichtdarstellung der drei Linsen 5a -c aus Fig. 4 und ihre relative Anordnung zueinander gezeigt, wenn diese in dem Trägersystem angeordnet sind. Wie man anhand dieser Figur gut erkennen kann, stabilisiert die Überlappung 13a der Linse 5a die beiden Linsen 5b und 5c mechanisch, indem die Überlappung 13a in die entsprechenden Ausnehmungen 13c der Linsen 5b und 5c angeordnet wird.

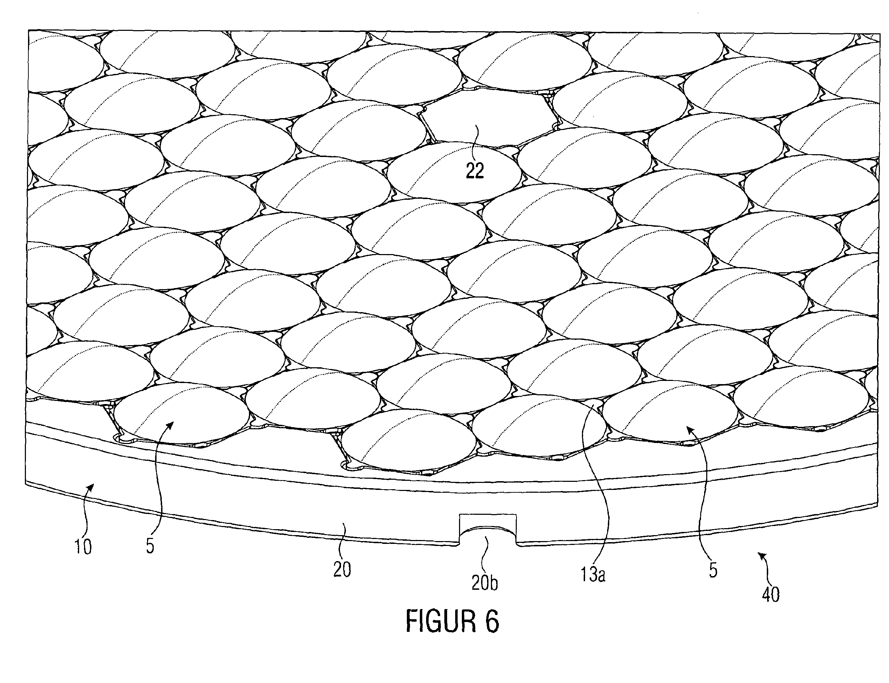

In Fig. 6 ist eine vergrößerte isometrische Draufsichtdarstellung eines Ausschnittes eines Linsensystems 40, in dem eine Vielzahl von Linsen 5 auf einer Trägerplatte 20 angeordnet sind, dargestellt. Durch die einzelnen Überlappungen 13a der Linsen 5 werden die entsprechend davor angeordneten Linsen ähnlich wie bei Dachziegeln mechanisch stabilisiert. Die hexagonale Grundstruktur der Linsenanordnung ist gut anhand der fehlenden Linse 22 in Fig. 6 zu erkennen.

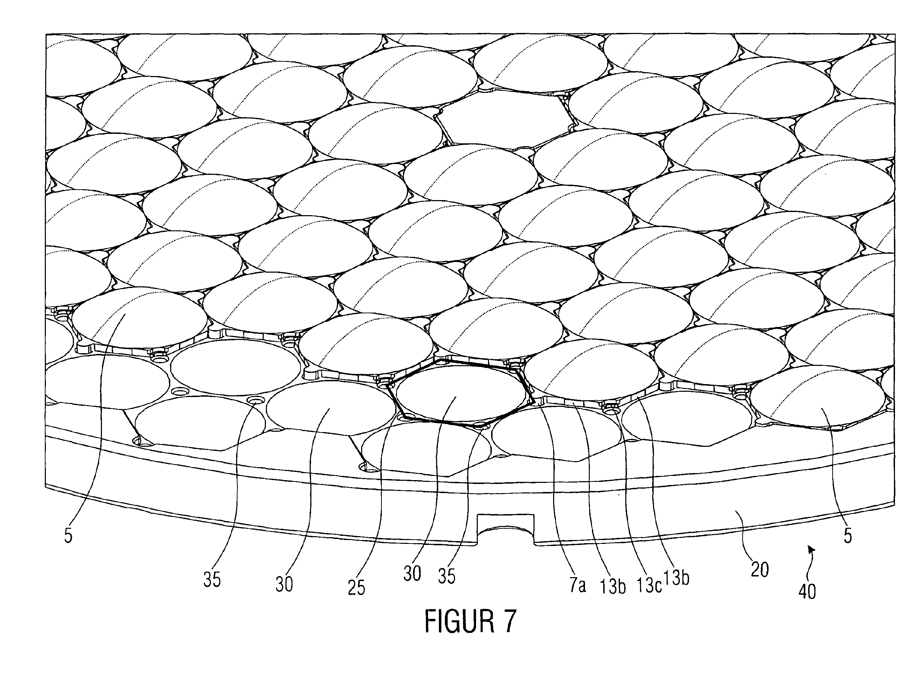

In Fig. 7 ist ebenfalls die vergrößerte isometrische Draufsichtdarstellung aus Fig. 6 dargestellt, wobei bei dieser Figur ein Teil der Linsen 5 aus dem Trägersystem entfernt worden ist, so dass die Trägerplatte 20 mit den hexagonalen Abschnitten 25, ebenso wie die zentralen Öffnungen 30 für den Lichtdurchtritt zu sehen sind. Ferner sind die kleineren Ausnehmungen 35 zur Aufnahme der Befestigungszapfen 7 der Linsen 5 dargestellt. Eine Linse 5 umfasst den oben bereits erwähnten Linsenkörper 15 sowie einen ersten Befestigungszapfen 7a und einen zweiten Befestigungszapfen 7b mit der oben bereits erwähnten Überlappung 13a. Die Linse 5 weist einen Rand bzw. Bund 13 auf mit entsprechenden Ausnehmungen 13c zur Aufnahme einer Überlappung 13a einer anderen Linse 5 sowie die tangentialen ebenen Flächen 13b, die gewährleisten, dass die Linsen in diesem Bereich ohne Spalt aneinander anliegen können und somit eine maximale Packungsdichte der Linsen ermöglicht werden kann.

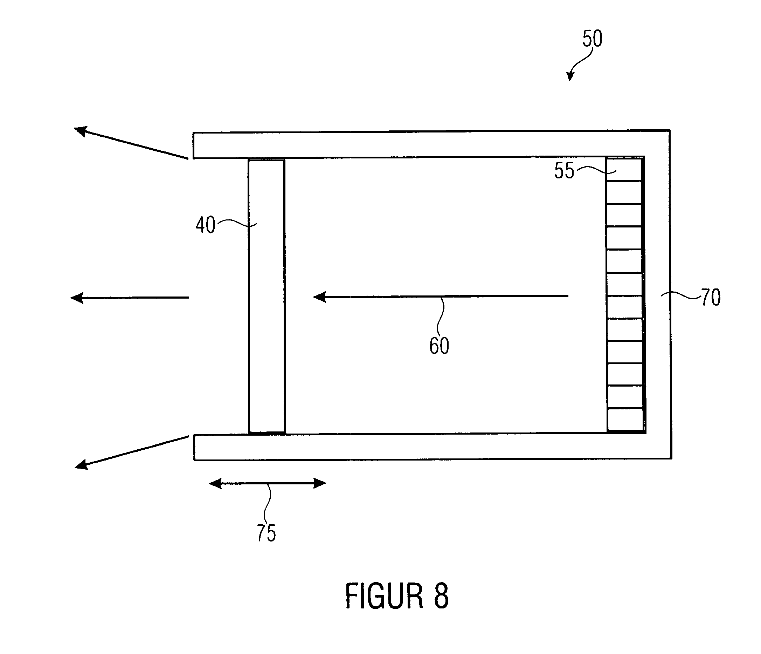

In Fig. 8 ist die schematische Darstellung eines erfindungsgemäßen optischen Systems 50 mit einem Array von Lichtquellen 55 und einem Linsensystem 40, wie es bereits oben beschrieben wurde, dargestellt. Bei dem optischen System 50 kann es sich beispielsweise um einen Scheinwerfer handeln. Das optische System 50 welches ein Array von Lichtquellen 55 und ein Linsensystem 40 umfasst kann dann in einem Gehäuse 70 eingebaut sein. Gemäß einem Ausführungsbeispiel kann das Linsensystem 40 beweglich 75 angeordnet sein in Bezug auf das Array von Lichtquellen 55. Das heißt, das Linsensystem kann auf das Array von Lichtquellen zu oder wegbewegt werden. Dadurch kann eine Zoomfunktion für die von den Lichtquellen 55 emittierte Lichtstrahlung 60 realisiert werden. Denkbar ist natürlich auch, dass das Array von Lichtquellen 55 beweglich gegenüber einem fest platzierten Linsensystem 40 angeordnet ist.

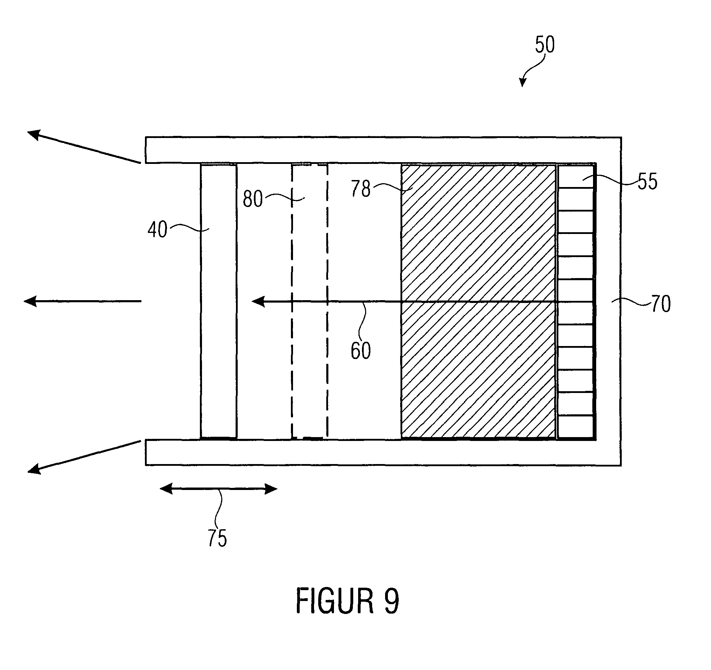

Wie nun schematisch in der Fig. 9 dargestellt ist, kann sich gemäß einem Ausführungsbeispiel der vorliegenden Erfindung zwischen dem Array von Lichtquellen 55 und dem Linsensystem 40 mindestens ein Reflektor 78, z. B. ein TIR - Reflektor befinden. Durch die Verwendung solch eines Reflektors kann eine Lichtausbeute sowie die Qualität des Lichtstrahls 60 verbessert werden. In weiteren Ausführungsbeispielen der vorliegenden Erfindung kann bei einem System 50 eine weitere Linsengruppe 80 angeordnet sein. Bei dieser Linsengruppe 80 kann es sich beispielsweise um eine Negativlinse, also um eine zerstreuende Linse handeln, dadurch kann die Qualität des Lichtstrahls 60 weiter verbessert werden. Gemäß weiteren Ausführungsbeispielen der vorliegenden Erfindung kann anstelle eines TIR-Reflektors 78 auch ein Rotationsellipsoid oder, wie oben bereits erwähnt, ein Compound Parabolic Concentrator (CPC bzw. Parabolspiegel) oder eine asphärische Linse verwendet werden.

Bei dem Array von Lichtquellen 55 kann es sich beispielsweise um ein Array von Leuchtdioden (LEDs) handeln. Die Leuchtdioden können unterschiedliche Emissionsspektren, beispielsweise im roten, grünen, gelben und blauen Spektralbereich aufweisen, und bei entsprechender Mischung damit auch ein gemischtes weißes Lichtspektrum emittieren. Bei dem Array von Lichtquellen 55 kann es sich also um LEDs in einem RGB-Mix handeln. Das optische System 50 kann über eine entsprechende Stromspannungsversorgung und eine entsprechende Ansteuerung der Lichtquellen verfügen, die in Fig. 8 und 9 jedoch nicht dargestellt sind. Durch eine entsprechende Ansteuerung der LEDs können also sämtliche Farben im sichtbaren Spektralbereich erzeugt werden. Bei dem optischen System 50 kann es sich um einen Scheinwerfer oder einen Moving Head handeln, wie er beispielsweise zur Beleuchtung von Bühnen, Gebäuden, für Film und Fernsehen oder für andere Event-Veranstaltungen oder in Diskotheken verwendet wird. Die Anzahl der Einzellichtquellen des Arrays von Lichtquellen 55 kann der Anzahl der Einzellinsen 5 des Linsensystems 40 entsprechen oder zumindest mit dieser korreliert sein.

## Patentansprüche

1. Trägerstruktur (10) für eine Mehrzahl von Linsen, mit:
einer Trägerplatte (20); und
einer Mehrzahl von aneinander angrenzenden, hexagonalen Abschnitten (25) auf der Trägerplatte,
wobei in jedem der hexagonalen Abschnitte eine zentrale Öffnung (30) vorgesehen ist, die die Trägerplatte (20) durchdringt, und
wobei die Trägerplatte (20) an den Scheitelpunkten der aneinander angrenzenden, hexagonalen Abschnitte jeweils Ausnehmungen (35) zur Aufnahme eines Befestigungsstiftes einer Linse (5) aufweist.

2. Trägerstruktur nach Anspruch 1, bei der die Ausnehmungen (35) an den Scheitelpunkten die Trägerplatte durchdringen.

3. Linse (5) zur Anordnung in einem Trägersystem (10), mit:
einem Linsenkörper (15);
einem ersten Befestigungsstift (7a), der an einer ersten Position an dem Linsenkörper (15) angeordnet ist und sich in einer ersten Richtung von dem Linsenkörper erstreckt; und
einem zweiten Befestigungsstift (7b), der an einer zweiten Position an dem Linsenkörper (15) angeordnet ist und sich in die erste Richtung erstreckt.

4. Linse nach Anspruch 3, bei der der Linsenkörper eine erste, ebene Hauptoberfläche und eine gewölbte, der ersten Hauptoberfläche gegenüberliegende zweite Hauptoberfläche aufweist, und bei der sich der erste Befestigungsstift und der zweite Befestigungsstift senkrecht zu der ersten Hauptoberfläche erstrecken.

5. Linse nach Anspruch 3 oder 4, bei der die erste Position, an der der erste Befestigungsstift angeordnet ist, und die zweite Position, an der der zweite Befestigungsstift angeordnet ist, diametral gegenüberliegend an dem Linsenkörper angeordnet sind.

6. Linse gemäß Anspruch 3, bei der der Linsenkörper eine Bikonvexlinse, eine Plankonvexlinse, eine Konkavkonvexlinse, eine Bikonkavlinse, eine Plankonkavlinse oder eine Konvexkonkavlinse definiert.

7. Linse gemäß einem der Ansprüche 3 bis 6, wobei die Linse (5a) einen Rand (13) mit einem Überlapp (13a) und einer Ausnehmung (13c) aufweist, wobei der Überlapp ausgebildet ist zumindest teilweise in eine Ausnehmung einer zweiten Linse (5b, 5c) zu passen, und wobei die Ausnehmung (13c) ausgebildet ist zumindest teilweise den Überlapp einer dritten Linse (5d) aufzunehmen.

8. Linsensystem (40), mit:
einem Trägersystem (10) nach Anspruch 1 oder 2; und
einer Mehrzahl von Linsen (5) nach einem der Ansprüche 3 bis 7, wobei die Befestigungsstifte (7) der Linsen (5) in den Ausnehmungen (35) der Trägerplatte (20) des Trägersystems (10) aufgenommen sind.

9. Optisches System (50), mit:
einem Array von Lichtquellen (55); und
einem Linsensystem (40) nach Anspruch 8.

10. Optisches System (50) nach Anspruch 9, bei dem das Linsensystem (40) bezüglich des Arrays von Lichtquellen (55) beweglich (75) angeordnet ist, um eine Zoomfunktion bereitzustellen.

11. Optisches System (50) nach Anspruch 9 oder 10, mit einem Reflektor (78), der zwischen dem Array von Lichtquellen (55) und dem Linsensystem (40) angeordnet ist.

12. Optisches System nach Anspruch 10, bei dem das Array von Lichtquellen (55) eine Mehrzahl von Leuchtdioden (LEDs) in einem rot-grün-blau (RGB)- Mix umfasst, bei dem das Linsensystem Plankonvexlinsen umfasst, und bei dem der Reflektor ein totaler interner (TIR) -Reflektor (TIR =: Total Internal Reflection) (78) ist.

13. Optisches System (50) nach einem der Ansprüche 11 oder 12, wobei der Reflektor (78) als TIR- Reflektor, als Rotationsellipsoid oder als Parabolspiegel (CPC =: Compound Parabolic Concentrator) ausgebildet ist.

14. Optisches System gemäß einem der Ansprüche 9 bis 13, das ferner eine weitere Linsengruppe (80) aufweist, die als Negativlinse ausgebildet ist und zwischen dem Linsensystem (40) und dem Array von Lichtquellen (55) angeordnet ist.
